(19) Europäisches Patentamt

European Patent Office

Office européen des brevets

(11) **EP 2 950 551 B1**

(12) **EUROPEAN PATENT SPECIFICATION**

(45) Date of publication and mention of the grant of the patent:
**15.11.2017 Bulletin 2017/46**

(21) Application number: **15169070.8**

(22) Date of filing: **25.05.2015**

(51) Int Cl.:
*H04N 21/2187* (2011.01)　　*H04N 21/442* (2011.01)
*H04N 21/25* (2011.01)　　*H04N 21/2743* (2011.01)
*H04N 21/414* (2011.01)　　*H04N 21/422* (2011.01)
*H04N 21/472* (2011.01)　　*H04N 21/482* (2011.01)
*H04N 21/81* (2011.01)　　*H04N 21/845* (2011.01)
*H04N 21/8547* (2011.01)

(54) **METHOD FOR RECOMMENDING MULTIMEDIA RESOURCE AND APPARATUS THEREOF**

VERFAHREN ZUR EMPFEHLUNG EINER MULTIMEDIARESSOURCE UND VORRICHTUNG DAFÜR

PROCEDE DE RECOMMANDATION DE RESSOURCES MULTIMEDIA ET SON APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2014 CN 201410230541**

(43) Date of publication of application:
**02.12.2015 Bulletin 2015/49**

(73) Proprietor: **Xiaomi Inc.**
**Beijing 100085 (CN)**

(72) Inventors:
• **LIN, Bin**
**100085 BEIJING (CN)**

• **ZHANG, Bo**
**100085 BEIJING (CN)**

(74) Representative: **Cougard, Jean-Marie et al**
**Cabinet Beau de Loménie**
**158, rue de l'Université**
**75340 Paris Cedex 07 (FR)**

(56) References cited:
**EP-A2- 1 511 315**　　**US-A1- 2009 144 225**
**US-A1- 2011 029 666**　　**US-A1- 2012 222 057**
**US-A1- 2014 026 156**

EP 2 950 551 B1

**Description**

**TECHNICAL FIELD**

The present disclosure generally relates to the field of multimedia resource technology, and particularly, to a method for recommending a multimedia resource and an apparatus thereof.

**BACKGROUND**

In the information age, during the courses that a user visits internet or watching a video program, if multimedia resources that the user interests in are recommended to him/her, not only it will facilitate operations such as browsing or paying attention to relevant products by the user, in turn, achieving an object of enhancing the user's experience, but also a provider of the multimedia resources may be allowed to evaluate the extent of attention on the multimedia resources. Therefore, it is concerned by those skilled in the art how to accurately recommend multimedia resources to a proper group of users.

In the related art, a multimedia resource is typically recommended in the following manner. Firstly, the multimedia resource to be recommended is scored with a preference degree, and then the multimedia resource is recommended according to the score of the multimedia resource. Scoring the preference degree may be performed in the following manner: firstly, a multimedia resource similar to the multimedia resource to be recommended is determined according to the type of the multimedia resource to be recommended; and a user preference score of the multimedia resource to be recommended is determined according to a user preference score of the similar multimedia resource. The user preference score of the similar multimedia resource is obtained in the following manner: the similar multimedia resource is released on a plurality of playing devices of the similar multimedia resource; sensors are mounted on or in vicinity of the plurality of the playing devices; number of users and duration time of user staying are statistically processed through the sensors; and the user preference score of the similar multimedia resource is calculated based on the number of users and the duration time of user staying.

In implementation of the present disclosure, the inventors found at least the following problem existing in the related art:

Since the multimedia resource is scored based on the acquired simple user data (including the number of users and the duration time of user staying), the scoring manner has a defect of low accuracy.

Document US 2012/222057 A1 dated 30 August 2012 discloses that analysis of mental states is provided to enable data analysis pertaining to videos. A video is embedded within a web-enabled interface which enables collecting mental state data. This web-enabled interface is then distributed and information on mental states is collected. Data is captured from viewers of the video where the data includes facial information and/or physiological data.

The present invention is defined in the appended set of claims.

**BRIEF DESCRIPTION OF THE DRAWINGS**

The accompanying drawings, which are incorporated in and constitute a part of this specification, illustrate embodiments consistent with the application and, together with the description, serve to explain the principles of the application.

Fig.1 is a flow chart showing a method for recommending a multimedia resource according to an exemplary embodiment;

Fig.2 is a flow chart showing a method for recommending a multimedia resource according to an exemplary embodiment;

Fig.3 is a block diagram showing an apparatus for recommending a multimedia resource according to an exemplary embodiment; and

Fig.4 is a block diagram showing a server according to an exemplary embodiment.

**DETAILED DESCRIPTION**

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the application. Instead, they are merely examples of apparatuses and methods consistent with aspects related to the application as recited in the appended claims.

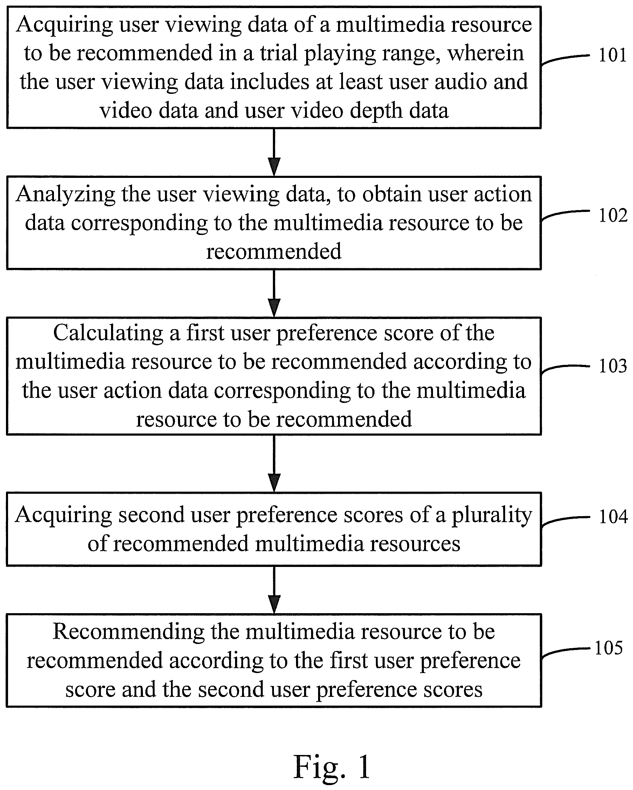

Fig.1 is a flow chart showing a method for recommending a multimedia resource according to an exemplary embodiment. As shown in Fig.1, the method for recommending a multimedia resource is performed in a server, and includes the following steps.

In step 101, data of a user viewing a multimedia resource to be recommended in a trial playing range (user viewing data) is acquired, wherein the user viewing data includes at least user audio and video data and user video depth data.

In step 102, the user viewing data is analyzed, to obtain user action data corresponding to the multimedia resource to be recommended.

In step 103, a first user preference score of the multimedia resource to be recommended is calculated according to the user action data corresponding to the multimedia resource to be recommended.

In step 104, second user preference scores of a plurality of recommended multimedia resources are acquired.

In step 105, the multimedia resource to be recommended is recommended according to the first user preference score and the second user preference scores.

In the method provided by the embodiments of the present disclosure, after the data of the user viewing the multimedia resource to be recommended in the trial playing range is analyzed to obtain the user action data corresponding to the multimedia resource to be recommended, the first user preference score of the multimedia resource to be recommended is calculated according to the user action data, and then the multimedia resource to be recommended is recommended according to the first user preference score and the second user preference scores of the plurality of recommended multimedia resources. Since the user preference score of the multimedia resource to be recommended are calculated according to the user action data corresponding to the multimedia resource to be recommended, and the user action data may reflect real preference degree of the users to the multimedia resource, the accuracy of recommending the multimedia resource to be recommended according to the user preference score of the multimedia resource to be recommended and the user preference scores of the recommended multimedia resources, is relatively high.

Optionally, the step of calculating the first user preference score of the multimedia resource to be recommended according to the user action data corresponding to the multimedia resource to be recommended, includes:

for each piece of the user action data, at least one user action included in the piece of user action data is determined;
pre-stored corresponding relationships between the user actions and user preference values are inquired to obtain a user preference value corresponding to the at least one user action;
a weight corresponding to each of the user actions is determined according to a ratio of a duration time of the user action to a playing time length of a recommended multimedia resource; and
the first user preference score of the multimedia resource to be recommended is calculated according to the user preference value and the weight corresponding to each of the user actions.

Optionally, before the pre-stored corresponding relationships between the user actions and user preference values are inquired to obtain the user preference value corresponding to the at least one user action, the method further includes:

for each of the user actions, a user preference value is preset for the user action; and
the corresponding relationships between the user actions and user preference values are stored.

Optionally, the step of recommending the multimedia resource to be recommended according to the first user preference score and the second user preference scores, includes:

among the second user preference scores, a third user preference score which is similar to the first user preference score is determined;
a receiving user of the multimedia resource to be recommended is determined according to the third user preference score; and
the multimedia resource to be recommended is sent to a playing device of the receiving user,
wherein the second user preference scores are calculated according to data collected by second sensors which are mounted on or in vicinity of a plurality of playing devices corresponding to the recommended multimedia resources.

Optionally, determining the receiving user of the multimedia resource to be recommended according to the third user preference score, includes:

among third user preference scores, a user preference score which is greater than a preset threshold is determined; and

a user corresponding to the user preference score which is greater than the preset threshold is determined as the receiving user of the multimedia resource to be recommended.

Optionally, after the multimedia resource to be recommended is sent to the playing devices of the receiving user, the method further includes:

user viewing data collected by a third sensor corresponding to the multimedia resource to be recommended is acquired;

the user viewing data collected by the third sensor is analyzed, to obtain a plurality pieces of user action data corresponding to the multimedia resource to be recommended;

according to each piece of the user action data, a user preference score of the multimedia resource to be recommended is updated; and

validity of the multimedia resource to be recommended is determined according to the updated user preference score.

Optionally, the user viewing data is collected by first sensors which are mounted on or in vicinity of a plurality of playing devices in the trial playing range.

All of the above optional technical solutions may form other optional embodiments of the present disclosure in an arbitrary combination thereof, and the description thereof will not be repeated herein.

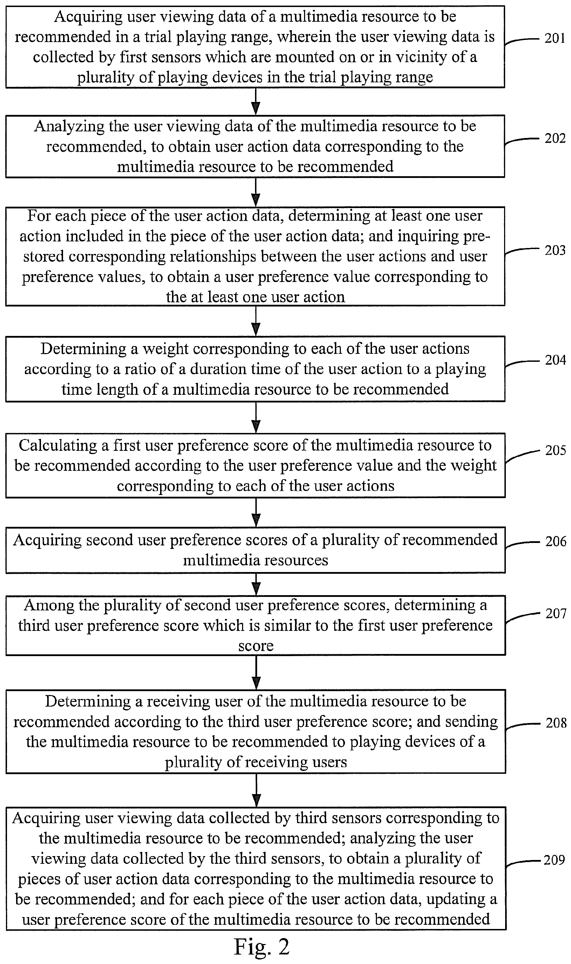

Fig.2 is a flow chart showing a method for recommending a multimedia resource according to an exemplary embodiment. As shown in Fig.2, the method for recommending a multimedia resource is performed in a server, and includes the following steps.

In step 201, data of a user viewing a multimedia resource to be recommended in a trial playing range (user viewing data) is acquired, wherein the user viewing data is collected by first sensors which are mounted on or in vicinity of a plurality of playing devices in the trial playing range.

The trial playing range refers to a small range for trial playing the multimedia resource to be recommended. For example, if a provider of the multimedia resource to be recommended intends to release the multimedia resource to be recommended nationwide, the trial playing range may be one province or one city; and if the provider of the multimedia resource to be recommended intends to release the multimedia resource to be recommended citywide, the trial playing range may be one district in the city.

In addition, the user viewing data includes at least user audio and video data and user video depth data acquired by the sensors within its covering range. Number of users, an identity of each user, a specific property of each user (gender and approximate age), a specific action of each user, and so on within the covering range of the sensors may be acquired, through the user viewing data.

In the embodiments of the present disclosure, the multimedia resource to be recommended corresponds to one identifier (ID) which may uniquely identify the multimedia resource to be recommended. In the embodiments of the present disclosure, in order to identify and distinguish numerous multimedia resources, each multimedia resource is provided with an identifier. The identifier may be composed of numerals or characters, or numerals and characters, the form of which being not specifically limited in the embodiments of the present disclosure.

In addition to the identifier, any one multimedia resource may further include other properties such as a type to which the multimedia resource belongs, a playing form of the multimedia resource, different versions of the multimedia resource, playing time of the multimedia resource, a playing time length of the multimedia resource, a playing device of the multimedia resource, and so on. Types of multimedia resources may include household appliances, food, clothing, sporting goods, shoes and hats, etc., playing forms of multimedia resources may be videos, pictures, audios, etc., the playing time of the multimedia resource refers to at which specific time in a specific range of time the multimedia resource is played, the playing time length of the multimedia resource may equal to the time length of the multimedia resource itself, or may be greater than the time length of the multimedia resource itself, and playing devices of a multimedia resource may include multimedia playing devices in public areas, and may also include multimedia playing devices in private areas.

In the embodiments of the present disclosure, the first sensors are provided on or in vicinity of the plurality of playing devices in the trial playing range of the multimedia resource to be recommended. The first sensors refer to at least one sensor, and the term of first sensor is only used to refer to the sensors corresponding to the recommended multimedia resources. For a playing device such as an intelligent TV or an intelligent computer, it is typically provided with a built-in sensor, or provided with a built-in camera that has a sensing function, in addition to a built-in camera, so, for such a device, the sensor is disposed on the playing device. For a playing device such as an ordinary TV or a multimedia resource display booth in a public area, it has no built-in sensor, so the sensor needs to be mounted on or in vicinity of the playing device, to collect user viewing data through the sensor. A sensor may include a microphone, a camera, a visual sensor with depth information, a sensor which emits near infrared light, a distance sensor, an optical sensor, and so on. The types of the sensors are not specifically limited in the embodiments of the present disclosure.

In step 202, the data of the user viewing the multimedia resource to be recommended is analyzed, to obtain user action data corresponding to the multimedia resource to be recommended.

In the embodiments of the present disclosure, the plurality of playing devices in the trial playing range of the multimedia resource to be recommended may play dozens of, even hundreds of multimedia resources in a period of time. The first sensors provided on or in vicinity of the plurality of playing devices, in turn, will collect dozens, even hundreds pieces of user viewing data corresponding to the multimedia resources. These pieces of user viewing data are mixed altogether, so the data of the user viewing the multimedia resource to be recommended needs to be acquired from the numerous pieces of user viewing data. Acquiring the data of the user viewing the multimedia resource to be recommended may be specifically implemented in the following manner:

Playing time of the multimedia resource to be recommended is acquired; user viewing data within a time period of the playing time is acquired from the numerous pieces of user viewing data according to the playing time; and the acquired user viewing data is taken as the data of the user viewing the multimedia resource to be recommended.

However, in addition to the above manner of acquiring the multimedia resource to be recommended, other acquiring manners may be adopted, which are not limited by the embodiments of the present disclosure. After the data of the user viewing the multimedia resource to be recommended is acquired, a plurality of pieces of user action data corresponding to the multimedia resource to be recommended may be obtained by analyzing the user viewing data. Specific implementation of obtaining user action data according to the user viewing data belongs to existing known technology, and may be realized through specific algorithm of the related art, which will not be repeated herein. One user corresponds to one piece of user action data, and the piece of user action data covers at least one user action. The user actions may include entering or departing the covering range of a first sensor, watching a playing device of the multimedia resource to be recommended, talking, laughing, a big gesture action, a big body action, sleeping, sitting, walking, and so on. The contents of the user actions are not specifically limited in the embodiments of the present disclosure.

In step 203, at least one user action included in the piece of each user action data is determined, and pre-stored corresponding relationships between the user actions and user preference values are inquired to obtain a user preference value corresponding to the at least one user action.

The user action data of one user may include one or more user actions. For example, for one user, he/she may laugh with a big gesture action (applauding) while watching the multimedia resource to be recommended. A user preference value represents a preference degree of a user to the multimedia resource to be recommended. In the embodiments of the present disclosure, before the user preference value corresponding to the at least one user action is obtained, a process of establishing corresponding relationships between the user actions and the user preference values is further included, specifically as follows.

For each of the user actions, a user preference value is preset for the user action; and the corresponding relationships between the user actions and user preference values are stored.

Presetting user preference values for the user actions may be specifically implemented in the following two manners.

In a first manner, according to empiric values, different user preference values are directly specified for different user actions.

During a course a user is watching a multimedia resource, if he/she laughs or produces a big body action, the user apparently shows preference to the multimedia resource, and if he/she is sleeping or goes off immediately, the user apparently shows antipathy to the multimedia resource. In the first manner, different user preference values are directly specified for different user actions based on such empiric values. However, in the first manner, the setting of the user preference values has a low accuracy.

In a second manner, by machine learning, a large quantity of user action data is collected, and the large quantity of user action data is analyzed and statistically processed, different user preference values are specified for different user actions according to the results of the analyzing and statistical processing.

In the second manner, since a large quantity of user action data is analyzed by machine learning, the setting user preference values for different user actions has a relatively high accuracy.

In step 204, a weight corresponding to each of the user actions is determined according to a ratio of a duration time of the user action to a playing time length of a multimedia resource to be recommended.

In the embodiments of the present disclosure, for one user, at an initial moment of playing the multimedia resource to be recommended, the user may be attracted by its blazing beginning, laugh and gradually approach the playing device of the multimedia resource to be recommended. After the beginning, the user may suddenly lose interest in the subject or recommended product showed by the multimedia resource to be recommended, and may directly go off. In this case, in order to accurately determine preference degrees of a plurality of users to the multimedia resource to be recommended, in the embodiments of the present disclosure, a step of setting a weight for each of the user actions is further included.

In setting a weight for each of the user actions, the weight may be set according to the ratio of the duration time of the user action to the playing time length of the multimedia resource to be recommended. For one user action, the longer the ratio of its duration time to the playing time length of the multimedia resource to be recommended is, the greater the corresponding weight is. Supposing that the playing time length of the multimedia resource to be recommended is 30 seconds, during which time a user firstly produces a big gesture action (applauding drastically), and then talks with others and does not watch the multimedia resource to be recommended anymore. However, the duration time of the big gesture action is only 5 seconds, and the ratio to the playing time length of the multimedia resource to be recommended is 1/6, and the duration time of talking to others and not watching the multimedia resource to be recommended is 25 seconds, and the ratio to the playing time length of the multimedia resource to be recommended is 5/6. Therefore, the weight of the latter is far greater than the weight of the former in setting weights for the above two user actions.

In step 205, the first user preference score of the multimedia resource to be recommended is calculated according to the user preference value and the weight corresponding to each of the user actions.

In the embodiments of the present disclosure, after a user preference value and a weight corresponding to each of the user actions are obtained according to the above step 203 and step 204, the first user preference score of the played multimedia resource with respect to a plurality of users may be obtained according to the following formula (1).

$$S = \frac{a_1 * r_1 + a_2 * r_2 + \ldots\ldots + a_n * r_n}{n} \qquad (1)$$

S refers to a first user preference score, each of $a_1$ to $a_n$ refers to a user preference value corresponding to each of the user actions, each of $r_1$ to $r_n$ refers to a weight corresponding to each of the user actions, and n refers to the number of the user actions.

It should be noted that, through the process illustrated by the above steps 201 to 205, the first user preference score of the multimedia resource to be recommended may be obtained. In a subsequent process, before the multimedia resource to be recommended is played, the multimedia resource to be recommended may be recommended according to the above first user preference score corresponding to the multimedia resource to be recommended, to improve the accuracy of the recommendation of a multimedia resource.

In step 206, second user preference scores of a plurality of recommended multimedia resources are acquired.

In the embodiments of the present disclosure, after the plurality of recommended multimedia resources are released, the server may keep modifying the user preference scores of the plurality of recommended multimedia resources to obtain the second user preference scores according to user viewing data of the plurality of recommended multimedia resources collected by the sensors through the process of the above steps 201 to 205, and store them in its storage medium. Since each multimedia resource corresponds to one identifier, the second user preference scores of the plurality of recommended multimedia resources may be acquired in the storage medium according to the identifiers. The storage medium may be a memory or a hard disk, and the like. The type of the storage medium is not specifically limited by the embodiments of the present disclosure.

In step 207, among the plurality of second user preference scores, a third user preference score which is similar to the first user preference scores is determined.

In the embodiments of the present disclosure, for each multimedia resource, according to the process provided in the above steps 201 to 205, a user preference score with respect to each user to the multimedia resource within a covering range of a corresponding sensor may be acquired. Thus, for one multimedia resource, it may corresponds to a plurality of user preference scores, and the user preference scores are obtained by analyzing user actions of different users during the time the multimedia resource is played. In the embodiments of the present disclosure, the first user preference score includes a user preference score with respect to at least one user to the multimedia resource to be recommended, and a second user preference score includes a user preference score with respect to at least one user to a recommended multimedia resource.

Being similar means a difference between user preference scores is less than a first particular value, or all of the user preference scores are greater than a second particular value, the second particular value being greater than the first particular value. However, similar user preference scores may be expressed in other forms than the above mentioned manners, which are not specifically limited in the present embodiments of the present disclosure. Determining whether the first user preference scores are similar to the second user preference scores may be specifically implemented in the following two manners.

In a first manner, an average value of the first user preference scores with respect to a plurality of users to the multimedia resource to be recommended is calculated, an average value of the second user preference scores with respect to a plurality of users to a recommended multimedia resource is calculated, and in a plurality of average values corresponding to the second user preference scores, an average value which is similar to the average value corresponding to the first user preference scores is determined, then a user preference score corresponding to the similar average value is a third user preference score.

In a second manner, after the first preference scores are acquired, user preference scores with respect to a plurality of users to the multimedia resource to be recommended and the recommended multimedia resources may be categorized according to a plurality of properties such as ages, genders, etc. For example, if user preference scores are categorized in ages, user preference scores with respect to each age group to the multimedia resource to be recommended are statistically processed. For example, user preference scores with respect to users of 10-20 years old to the multimedia resource to be recommended, user preference scores with respect to users of 20-30 years old to the multimedia resource to be recommended, user preference scores with respect to users of 30-40 years old to the multimedia resource to be recommended, user preference scores with respect to users of 40-50 years old to the multimedia resource to be recommended, user preference scores with respect to users of 50-60 years old to the multimedia resource to be recommended, and user preference scores with respect to users of 60 years old and above to the multimedia resource to be recommended, are respectively statistically processed. The user preference scores with respect to users of each age group to the multimedia resource to be recommended is taken as the user preference scores to the multimedia resource to be recommended. After the second user preference scores are acquired, user preference scores with respect to a plurality of users to the recommended multimedia resources may also be categorized in the above manner. For one second user preference score, if a user preference score of a category corresponding to the second user preference score is similar to a user preference score of the category corresponding to the multimedia resource to be recommended, the user preference score is a third user preference score similar to the first user preference score.

In addition, in calculating a user preference score with respect to each age group to the recommended multimedia resource, among the user preference scores with respect to all the users in the age group, user preference scores which are lower than a first value and user preference scores which are higher than a second value are deleted, an average value of the remaining user preference scores are calculated, and the resulted average value is taken as the user preference score corresponding to the age group. However, in addition to the above manner of calculating the user preference score with respect to users of each age group to the recommended multimedia resource, other calculating manners may also be adopted, which are not specifically limited in the embodiments of the present disclosure.

In step 208, a receiving user of the multimedia resource to be recommended is determined according to the third user preference score, and the multimedia resource to be recommended is sent to playing devices of a plurality of receiving users.

In the embodiments of the present disclosure, determining a plurality of receiving users of the multimedia resource to be recommended according to the user preference scores of the multimedia resource to be recommended, may be specifically implemented in the following manner: among a plurality of user preference scores corresponding to the multimedia resource to be recommended, user preference scores which are greater than a preset threshold are determined, and the users corresponding to the user preference scores which are greater than the preset threshold are determined as the receiving users of the multimedia resource to be recommended.

A size of the preset threshold may be 10, 100, or other values, which is not specifically limited in the embodiments of the present disclosure. The size of the preset threshold may be decided depending on the setting of the user preference value and weight.

For the first manner in the above step 207, the determined third user preference score may be more than one, thus the user preference scores may be further screened through the limit of the preset threshold, so as to improve the accuracy in recommending the multimedia resource according to the user preference scores subsequently. In recommending the multimedia resource to be recommended, the users corresponding to the user preference scores which are greater than the preset threshold may be directly determined as the receiving users of the multimedia resource to be recommended.

For the second manner in the above step 207, if the preference scores with respect to users of each age group to the multimedia resource to be recommended are categorized, among the user preference scores with respect to each category corresponding to user preference scores which are greater than the preset threshold, user preference scores which are greater than the preset threshold are determined, in turn, an age group corresponding to the user preference scores which are greater than the preset threshold is determined, and finally, all the users of the age group are taken as the receiving users of the multimedia resource to be recommended.

It should be noted that, the recommending of the multimedia resource to be recommended may be completed through the above steps 201 to 208. After the multimedia resource to be recommended is recommended, the user preference scores of the multimedia resource to be recommended may be updated through user viewing data collected by third sensors mounted on the playing devices of the multimedia resource to be recommended, a specific process of which is as the following step 209.

In step 209, user viewing data collected by third sensors corresponding to the multimedia resource to be recommended are acquired, the user viewing data collected by the third sensors are analyzed, to obtain a plurality of pieces of user action data corresponding to the multimedia resource to be recommended, and according to each piece of the user action data, the user preference score of the multimedia resource to be recommended is updated.

In this step, specific processes of acquiring user viewing data, acquiring user action data according to the user viewing data, and updating the user preference score of the multimedia resource to be recommended according to the user action data may be referred to in the above steps 201 to 205, which are not repeated herein. After the user preference score is updated, validity of the multimedia resource to be recommended is determined according the updated user preference score. That is, after the multimedia resource to be recommended is actually released in a real environment, the popularity of the multimedia resource to be recommended may be evaluated according to the updated user preference score. Further, in combination with user properties, the preference degrees of different groups of users to the multimedia resource to be recommended, for example, preference degrees respectively of the young, middle-aged and elderly users to the multimedia resource to be recommended, may be statistically processed. In combination with information about playing devices, the popularity of the multimedia resource to be recommended during the time it is played on different playing devices may further be statistically processed, and so on. All these statistic process may be separately performed, or in combination with each other.

In the method provided by the embodiments of the present disclosure, after the data of the user viewing the multimedia resource to be recommended in the trial playing range is analyzed to obtain the user action data corresponding to the multimedia resource to be recommended, the first user preference score of the multimedia resource to be recommended is calculated according to the user action data, and then the multimedia resource to be recommended is recommended according to the first user preference score and the second user preference scores of the plurality of recommended multimedia resources. Since the user preference score of the multimedia resource to be recommended are calculated according to the user action data corresponding to the multimedia resource to be recommended, and the user action data may reflect real preference degree of the users to the multimedia resource, the accuracy of recommending the multimedia resource to be recommended according to the user preference score of the multimedia resource to be recommended and the user preference scores of the recommended multimedia resources, is relatively high.

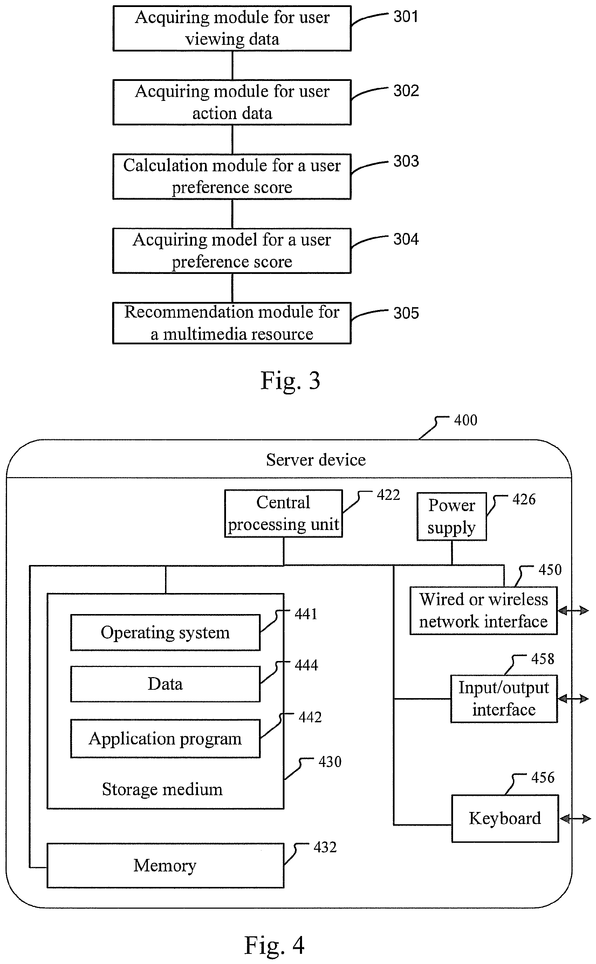

Fig.3 is a block diagram showing an apparatus for recommending a multimedia resource according to an exemplary embodiment. Referring to Fig.3, the apparatus includes an acquiring module 301 for user viewing data, an acquiring module 302 for user action data, a calculation module 303 for a user preference score, an acquiring model 304 for a user preference score and a recommendation module 305 for a multimedia resource.

The acquiring module 301 for user viewing data is coupled to the acquiring module 302 for user action data, and configured to acquire data of a user viewing a multimedia resource to be recommended in a trial playing range (user viewing data), wherein the user viewing data includes at least user audio and video data and user video depth data; the acquiring module 302 for user action data is coupled to the calculation module 303 for a user preference score, and configured to analyze the user viewing data, to obtain user action data corresponding to the multimedia resource to be recommended; the calculation module 303 for a user preference score is coupled to the acquiring model 304 for a user preference score, and configured to calculate a first user preference score of the multimedia resource to be recommended according to the user action data corresponding to the multimedia resource to be recommended; the acquiring model 304 for a user preference score is coupled to recommendation module 305 for a multimedia resource, and configured to acquire second user preference scores of a plurality of recommended multimedia resources; and the recommendation module 305 for a multimedia resource is configured to recommend the multimedia resource to be recommended according to the first user preference score and the second user preference scores.

Optionally, the calculation module for a user preference score includes:

a determination unit for a user action, configured to determine at least one user action included in each piece of the user action data;
an acquiring unit for a user preference value, configured to inquire pre-stored corresponding relationships between the user actions and user preference values, to obtain a user preference value corresponding to the at least one user action;
a weight determination unit, configured to determine a weight corresponding to each of the user actions according to a ratio of a duration time of the user action to a playing time length of a recommended multimedia resource; and
a calculation module for a user preference score, configured to calculate the first user preference score of the multimedia resource to be recommended according to the user preference value and the weight corresponding to each of the user actions.

Optionally, the apparatus further includes:

a setting module for a user preference value, configured to, for each of the user actions, preset a user preference value for the user action; and
a storing module, configured to store the corresponding relationships between the user actions and user preference values.

Optionally, the recommendation module for a multimedia resource includes:

a determination unit for a user preference score, configured to, among the second user preference scores, determine a third user preference score which is similar to the first user preference score;
a determination unit for a receiving user, configured to determine a receiving user of the multimedia resource to be recommended according to the third user preference score; and
a sending module for a multimedia resource, configured to send the multimedia resource to be recommended to a playing device of the receiving user,
wherein the second user preference scores are calculated according to data collected by second sensors which are mounted on or in vicinity of a plurality of playing devices corresponding to the recommended multimedia resources.

Optionally, the determination unit for a receiving user is configured to, among third user preference scores, determine a user preference score which is greater than a preset threshold, and determine a user corresponding to the user preference score which is greater than the preset threshold as the receiving user of the multimedia resource to be recommended.

Optionally, the apparatus further includes:

an acquiring module for sensor data, configured to acquire user viewing data collected by a third sensor corresponding to the multimedia resource to be recommended;
a user action module, configured to analyze the user viewing data collected by the third sensor, to obtain a plurality pieces of user action data corresponding to the multimedia resource to be recommended;
an updating module for a user preference score, configured to, according to each piece of the user action data, update a user preference score of the multimedia resource to be recommended; and
a validity determination module, configured to determine validity of the multimedia resource to be recommended according the updated user preference score.

Optionally, the user viewing data is collected by first sensors which are mounted on or in vicinity of a plurality of playing devices in the trial playing range. With respect to the apparatus in the above embodiments, specific operations performed by each modules have been described in detail in the embodiments of the related methods, which are not repeated herein.

In the apparatus provided by the embodiments of the present disclosure, after the data of the user viewing the multimedia resource to be recommended in the trial playing range is analyzed to obtain the user action data corresponding to the multimedia resource to be recommended, the first user preference score of the multimedia resource to be recommended is calculated according to the user action data, and then the multimedia resource to be recommended is recommended according to the first user preference score and the second user preference scores of the plurality of recommended multimedia resources. Since the user preference score of the multimedia resource to be recommended are calculated according to the user action data corresponding to the multimedia resource to be recommended, and the user action data may reflect real preference degree of the users to the multimedia resource, the accuracy of recommending the multimedia resource to be recommended according to the user preference score of the multimedia resource to be recommended and the user preference scores of the recommended multimedia resources, is relatively high.

Fig.4 is a block diagram showing a server according to an exemplary embodiment, configured to perform the above methods for recommending a multimedia resource. The server 400 may vary significantly in configuration or capabilities, and may include one or more central processing units (CPU) 422 (for example, one or more processors), and a memory 432, one or more storage media 430 (for example, one or more mass storage devices) for storing application programs 442 or data 444. The memory 432 and the storage medium 430 may be a transient or persistent storage. The programs stored in the storage medium 430 may include one or more modules (not shown in the Figures) each corresponding to a series of instructions in the server. Further, the central processing unit 422 is configured to communicate with the storage medium 430 and execute the series of instructions in the storage medium 430 on the server 400.

The server 400 may further include one or more power supplies 426, one or more wired or wireless network interfaces 450, and one or more input/output interfaces 458, one or more keyboards 456, and/or, one or more operating systems 441, such as Windows ServerTM, Mac OS XTM, UnixTM, LinuxTM, FreeBSDTM, and the like.

Other embodiments of the application will be apparent to those skilled in the art from consideration of the specification and practice of the application disclosed here. This application is intended to cover any variations, uses, or adaptations of the application following the general principles thereof and including such departures from the present disclosure as come within known or customary practice in the art.

It will be appreciated that the present application is not limited to the exact construction that has been described above and illustrated in the accompanying drawings, and that various modifications and changes can be made without departing from the scope thereof. It is intended that the scope of the application only be limited by the appended claims.

**Claims**

1. A method for recommending a multimedia content, comprising:

   acquiring (101) data of a user viewing a multimedia content to be recommended in a trial playing range, wherein the user viewing data comprises at least user audio, video data and user video depth data, said trial playing range being an area for trial playing said multimedia content to be recommended;
   analyzing (102) the user viewing data, to obtain user action data corresponding to the multimedia content to be recommended;
   alculating (103) a first user preference score of the multimedia content to be recommended according to the user action data corresponding to the multimedia content to be recommended;
   acquiring (104) second user preference scores of a plurality of recommended multimedia contents; and
   recommending (105) the multimedia content to be recommended according to the first user preference score and the second user preference scores.
   wherein the step of calculating (103) the first user preference score of the multimedia content comprises:

   determining at least one user action comprised in each piece of the user action data;
   inquiring pre-stored corresponding relationships between the user actions and user preference values, to obtain a user preference value corresponding to the at least one user action;
   determining a weight corresponding to each of the user actions according to a ratio of a duration time of the user action to a playing time length of a recommended multimedia content; and
   calculating the first user preference score of the multimedia content to be recommended according to the user preference value and the weight corresponding to each of the user actions.

2. The method according to claim 1, **characterized in that** before inquiring pre-stored corresponding relationships between the user actions and user preference values, to obtain a user preference value corresponding to the at least one user action, the method further comprises:

   for each of the user actions, presetting a user preference value for the user action; and
   storing the corresponding relationships between the user actions and user preference values.

3. The method according to any one of claims 1 or 2, **characterized in that** the step of recommending (105) the multimedia content to be recommended according to the first user preference score and the second user preference scores, comprises:

   among the second user preference scores, determining a third user preference score which is similar to the first user preference score;
   determining a receiving user of the multimedia content to be recommended according to the third user preference score; and
   sending the multimedia content to be recommended to a playing device of the receiving user,
   wherein the second user preference scores are calculated according to data collected by second sensors which are mounted on or in vicinity of a plurality of playing devices corresponding to the recommended multimedia contents.

4. The method according to claim 3, **characterized in that** the step of determining a receiving user of the multimedia content to be recommended according to the third user preference score, comprises:

   among third user preference scores, determining a user preference score which is greater than a preset threshold; and
   determining a user corresponding to the user preference score which is greater than the preset threshold as the receiving user of the multimedia content to be recommended.

5. The method according to any one of claims 1 to 4, **characterized in that** the user viewing data is collected by first sensors which are mounted on or in vicinity of a plurality of playing devices in the trial playing range.

6. An apparatus for recommending a multimedia content, comprising:

an acquiring module for user viewing data, configured to acquire data of a user viewing a multimedia content to be recommended in a trial playing range, wherein the user viewing data comprises at least user audio, video data and user video depth data, said trial playing range being an area for trial playing said multimedia content to be recommended;
an acquiring module for user action data, configured to analyze the user viewing data, to obtain user action data corresponding to the multimedia content to be recommended;
a calculation module for a user preference score, configured to calculate a first user preference score of the multimedia content to be recommended according to the user action data corresponding to the multimedia content to be recommended;
an acquiring model for a user preference score, configured to acquire second user preference scores of a plurality of recommended multimedia contents; and
a recommendation module for a multimedia content, configured to recommend the multimedia content to be recommended according to the first user preference score and the second user preference scores;
wherein the calculation module for a user preference score comprises:

a determination unit for a user action, configured to, for each piece of the user action data, determine at least one user action comprised in the piece of user action data;
an acquiring unit for a user preference value, configured to inquire pre-stored corresponding relationships between the user actions and user preference values, to obtain a user preference value corresponding to the at least one user action;
a weight determination unit, configured to determine a weight corresponding to each of the user actions according to a ratio of a duration time of the user action to a playing time length of a recommended multimedia content; and
a calculation module for a user preference score, configured to calculate the first user preference score of the multimedia content to be recommended according to the user preference value and the weight corresponding to each of the user actions.

7. The apparatus according to claim 8, **characterized in that** the apparatus further comprises:

a setting module for a user preference value, configured to, for each of the user actions, preset a user preference value for the user action; and
a storing module, configured to store the corresponding relationships between the user actions and the user preference values.

8. The apparatus according to claim 6 or 7, **characterized in that** the recommendation module for a multimedia content comprises:

a determination unit for a user preference score, configured to, among the second user preference scores, determine a third user preference score which is similar to the first user preference score;
a determination unit for a receiving user, configured to determine a receiving user of the multimedia content to be recommended according to the third user preference score; and
a sending module for a multimedia content, configured to send the multimedia content to be recommended to a playing device of the receiving user,
wherein the second user preference scores are calculated according to data collected by second sensors which are mounted on or in vicinity of a plurality of playing devices corresponding to the recommended multimedia contents.

9. The apparatus according to claim 8, **characterized in that** the determination unit for a receiving user is configured to, among third user preference scores, determine a user preference score which is greater than a preset threshold; and determine a user corresponding to the user preference score which is greater than the preset threshold as the receiving user of the multimedia content to be recommended.

10. A computer program including instructions for executing the steps of a method for recommending a multimedia content according to any one of claims 1 to 5 when said program is executed by a computer.

11. A recording medium readable by a computer and having recorded thereon a computer program including instructions for executing the steps of a method for recommending a multimedia content according to any one of claims 1 to 5.

**Patentansprüche**

1. Verfahren zum Empfehlen eines Multimedia-Inhalts, umfassend:

Erfassen (101) von Daten eines Nutzers, der einen zu empfehlenden Multimedia-Inhalt in einem Testabspielbereich betrachtet, wobei die Nutzerbetrachtungsdaten mindestens Nutzeraudio, Videodaten und Nutzervideotiefendaten umfassen, wobei der Testabspielbereich ein Bereich zum Testabspielen des zu empfehlenden Multimedia-Inhalts ist,
Analysieren (102) der Nutzerbetrachtungsdaten, um Nutzeraktionsdaten zu erhalten, die dem zu empfehlenden Multimedia-Inhalt entsprechen,
Berechnen (103) einer ersten Nutzerpräferenzwertung des zu empfehlenden Multimedia-Inhalts gemäß den Nutzeraktionsdaten, die dem zu empfehlenden Multimedia-Inhalt entsprechen,
Erfassen (104) von zweiten Nutzerpräferenzwertungen mehrerer empfohlener Multimedia-Inhalte, und
Empfehlen (105) des zu empfehlenden Multimedia-Inhalts gemäß der ersten Nutzerpräferenzwertung und den zweiten Nutzerpräferenzwertungen, wobei der Schritt des Berechnens (103) der ersten Nutzerpräferenzwertung des Multimedia-Inhalts umfasst:

Bestimmen mindestens einer Nutzeraktion, die in jedem Element der Nutzeraktionsdaten enthalten ist,
Abfragen zuvor gespeicherter entsprechender Beziehungen zwischen den Nutzeraktionen und Nutzerpräferenzwerten, um einen Nutzerpräferenzwert zu erhalten, der der mindestens einen Nutzeraktion entspricht,
Bestimmen eines Gewichts, das jeder der Nutzeraktionen entspricht, gemäß einem Verhältnis einer Zeitdauer der Nutzeraktion zu einer Abspielzeitlänge eines empfohlenen Multimedia-Inhalts, und
Berechnen der ersten Nutzerpräferenzwertung des zu empfehlenden Multimedia-Inhalts gemäß dem Nutzerpräferenzwert und dem Gewicht, das jeder der Nutzeraktionen entspricht.

2. Verfahren nach Anspruch 1, **dadurch gekennzeichnet, dass** vor dem Abfragen zuvor gespeicherter entsprechender Beziehungen zwischen den Nutzeraktionen und Nutzerpräferenzwerten, um einen Nutzerpräferenzwert zu erhalten, der der mindestens einen Nutzeraktion entspricht, das Verfahren ferner umfasst:

für jede der Nutzeraktionen, Voreinstellen eines Nutzerpräferenzwertes für die Nutzeraktion, und
Speichern der entsprechenden Beziehungen zwischen den Nutzeraktionen und Nutzerpräferenzwerten.

3. Verfahren nach einem der Ansprüche 1 oder 2, **dadurch gekennzeichnet, dass** der Schritt des Empfehlens (105) des zu empfehlenden Multimedia-Inhalts gemäß der ersten Nutzerpräferenzwertung und den zweiten Nutzerpräferenzwertungen umfasst:

unter den zweiten Nutzerpräferenzwertungen, Bestimmen einer dritten Nutzerpräferenzwertung, die der ersten Nutzerpräferenzwertung ähnelt,
Bestimmen eines empfangenden Nutzers des zu empfehlenden Multimedia-Inhalts gemäß der dritten Nutzerpräferenzwertung, und
Senden des zu empfehlenden Multimedia-Inhalts an eine Abspielvorrichtung des empfangenden Nutzers,
wobei die zweiten Nutzerpräferenzwertungen gemäß Daten berechnet werden, die durch zweite Sensoren erfasst werden, die an oder in der Nähe mehrerer Abspielvorrichtungen montiert sind, die den empfohlenen Multimedia-Inhalten entsprechen.

4. Verfahren nach Anspruch 3, **dadurch gekennzeichnet, dass** der Schritt des Bestimmens eines empfangenden Nutzers des zu empfehlenden Multimedia-Inhalts gemäß der dritten Nutzerpräferenzwertung umfasst:

unter dritten Nutzerpräferenzwertungen, Bestimmen einer Nutzerpräferenzwertung, die größer ist als eine voreingestellte Schwelle, und
Bestimmen eines Nutzers, der der Nutzerpräferenzwertung entspricht, die größer ist als die voreingestellte Schwelle, als den empfangenden Nutzer des zu empfehlenden Multimedia-Inhalts.

**5.** Verfahren nach einem der Ansprüche 1 bis 4, **dadurch gekennzeichnet, dass** die Nutzerbetrachtungsdaten durch erste Sensoren erfasst werden, die an oder in der Nähe mehrerer Abspielvorrichtungen in dem Testabspielbereich montiert sind.

**6.** Vorrichtung zum Empfehlen eines Multimedia-Inhalts, umfassend:

ein Erfassungsmodul für Nutzerbetrachtungsdaten, das dafür konfiguriert ist, Daten eines Nutzers zu erfassen, der einen zu empfehlenden Multimedia-Inhalt in einem Testabspielbereich betrachtet, wobei die Nutzerbetrachtungsdaten mindestens Nutzeraudio, Videodaten und Nutzervideotiefendaten umfassen, wobei der Testabspielbereich ein Bereich zum Testabspielen des zu empfehlenden Multimedia-Inhalts ist,
ein Erfassungsmodul für Nutzeraktionsdaten, das dafür konfiguriert ist, die Nutzerbetrachtungsdaten zu analysieren, um Nutzeraktionsdaten zu erhalten, die dem zu empfehlenden Multimedia-Inhalt entsprechen,
ein Berechnungsmodul für eine Nutzerpräferenzwertung, das dafür konfiguriert ist, eine erste Nutzerpräferenzwertung des zu empfehlenden Multimedia-Inhalts gemäß den Nutzeraktionsdaten, die dem zu empfehlenden Multimedia-Inhalt entsprechen, zu berechnen,
ein Erfassungsmodell für eine Nutzerpräferenzwertung, das dafür konfiguriert ist, zweite Nutzerpräferenzwertungen mehrerer empfohlener Multimedia-Inhalte zu erfassen, und
ein Empfehlungsmodul für einen Multimedia-Inhalt, das dafür konfiguriert ist, den zu empfehlenden Multimedia-Inhalt gemäß der ersten Nutzerpräferenzwertung und den zweiten Nutzerpräferenzwertungen zu empfehlen,
wobei das Berechnungsmodul für eine Nutzerpräferenzwertung umfasst:

eine Bestimmungseinheit für eine Nutzeraktion, die dafür konfiguriert ist, für jedes Element der Nutzeraktionsdaten mindestens eine Nutzeraktion zu bestimmen, die in dem Element von Nutzeraktionsdaten enthalten ist,
eine Erfassungseinheit für einen Nutzerpräferenzwert, die dafür konfiguriert ist, zuvor gespeicherte entsprechende Beziehungen zwischen den Nutzeraktionen und Nutzerpräferenzwerten abzufragen, um einen Nutzerpräferenzwert zu erhalten, der der mindestens einen Nutzeraktion entspricht,
eine Gewichtsbestimmungseinheit, die dafür konfiguriert ist, ein Gewicht, das jeder der Nutzeraktionen entspricht, gemäß einem Verhältnis einer Zeitdauer der Nutzeraktion zu einer Abspielzeitlänge eines empfohlenen Multimedia-Inhalts zu bestimmen, und
ein Berechnungsmodul für eine Nutzerpräferenzwertung, das dafür konfiguriert ist, die erste Nutzerpräferenzwertung des zu empfehlenden Multimedia-Inhalts gemäß dem Nutzerpräferenzwert und dem Gewicht, das jeder der Nutzeraktionen entspricht, zu berechnen.

**7.** Vorrichtung nach Anspruch 8, **dadurch gekennzeichnet, dass** die Vorrichtung ferner umfasst:

ein Einstellmodul für einen Nutzerpräferenzwert, das dafür konfiguriert ist, für jede der Nutzeraktionen einen Nutzerpräferenzwert für die Nutzeraktion voreinzustellen, und
ein Speichermodul, das dafür konfiguriert ist, die entsprechenden Beziehungen zwischen den Nutzeraktionen und den Nutzerpräferenzwerten zu speichern.

**8.** Vorrichtung nach Anspruch 6 oder 7, **dadurch gekennzeichnet, dass** das Empfehlungsmodul für einen Multimedia-Inhalt umfasst:

eine Bestimmungseinheit für eine Nutzerpräferenzwertung, die dafür konfiguriert ist, unter den zweiten Nutzerpräferenzwertungen eine dritte Nutzerpräferenzwertung zu bestimmen, die der ersten Nutzerpräferenzwertung ähnelt,
eine Bestimmungseinheit für einen empfangenden Nutzer, die dafür konfiguriert ist, einen empfangenden Nutzer des zu empfehlenden Multimedia-Inhalts gemäß der dritten Nutzerpräferenzwertung zu bestimmen, und
ein Sendemodul für einen Multimedia-Inhalt, das dafür konfiguriert ist, den zu empfehlenden Multimedia-Inhalt an eine Abspielvorrichtung des empfangenden Nutzers zu senden,
wobei die zweiten Nutzerpräferenzwertungen gemäß Daten berechnet werden, die durch zweite Sensoren erfasst werden, die an oder in der Nähe mehrerer Abspielvorrichtungen montiert sind, die den empfohlenen Multimedia-Inhalten entsprechen.

**9.** Vorrichtung nach Anspruch 8, **dadurch gekennzeichnet, dass** die Bestimmungseinheit für einen empfangenden Nutzer dafür konfiguriert ist, unter dritten Nutzerpräferenzwertungen eine Nutzerpräferenzwertung zu bestimmen, die größer ist als eine voreingestellte Schwelle, und einen Nutzer, der der Nutzerpräferenzwertung entspricht, die größer ist als die voreingestellte Schwelle, als den empfangenden Nutzer des zu empfehlenden Multimedia-Inhalts zu bestimmen.

**10.** Computerprogramm, das Anweisungen enthält, um die Schritte eines Verfahrens zum Empfehlen eines Multimedia-Inhalts nach einem der Ansprüche 1 bis 5 auszuführen, wenn das Programm durch einen Computer ausgeführt wird.

**11.** Aufzeichnungsmedium, das durch einen Computer gelesen werden kann und auf dem ein Computerprogramm aufgezeichnet ist, das Anweisungen enthält, um die Schritte eines Verfahrens zum Empfehlen eines Multimedia-Inhalts nach einem der Ansprüche 1 bis 5 auszuführen.

**Revendications**

**1.** Procédé de recommandation d'un contenu multimédia, comprenant :

l'acquisition (101) de données d'un utilisateur qui visualise un contenu multimédia à recommander pendant une durée d'essai, dans lequel les données de visualisation de l'utilisateur comprennent au moins des données audio d'utilisateur, des données vidéo d'utilisateur et des données de profondeur vidéo d'utilisateur, ladite durée d'essai étant une durée d'essai de visualisation dudit contenu multimédia à recommander ;
l'analyse (102) des données de visualisation de l'utilisateur, afin d'obtenir des données d'action de l'utilisateur correspondant au contenu multimédia à recommander ;
le calcul (103) d'un premier score de préférence d'utilisateur du contenu multimédia à recommander selon les données d'action de l'utilisateur correspondant au contenu multimédia à recommander ;
l'acquisition (104) de seconds scores de préférences d'utilisateur d'une pluralité de contenus multimédia recommandés ; et
la recommandation (105) du contenu multimédia à recommander selon le premier score de préférence d'utilisateur et les seconds scores de préférences d'utilisateur,
dans lequel l'étape de calcul (103) du premier score de préférence d'utilisateur du contenu multimédia comprend :

la détermination d'au moins une action d'utilisateur comprise dans chacune des données d'action d'utilisateur ;
l'examen des relations correspondantes pré-stockées entre les actions d'utilisateur et les valeurs de préférence d'utilisateur, afin d'obtenir une valeur de préférence d'utilisateur correspondant à la au moins une action d'utilisateur ;
la détermination d'une pondération correspondant à chacune des actions d'utilisateur selon un rapport entre une durée de l'action d'utilisateur et une durée de lecture d'un contenu multimédia recommandé ; et
le calcul du premier score de préférence d'utilisateur du contenu multimédia à recommander selon la valeur de préférence d'utilisateur et la pondération correspondant à chacune des actions d'utilisateur.

**2.** Procédé selon la revendication 1, **caractérisé en ce que**, avant l'examen des relations correspondantes pré-stockées entre les actions d'utilisateur et les valeurs de préférence d'utilisateur, afin d'obtenir une valeur de préférence d'utilisateur correspondant à la au moins une action d'utilisateur, le procédé comprend en outre :

pour chacune des actions d'utilisateur, la prédéfinition d'une valeur de préférence d'utilisateur pour l'action d'utilisateur ; et
le stockage des relations correspondantes entre les actions d'utilisateur et les valeurs de préférence d'utilisateur.

**3.** Procédé selon l'une quelconque des revendications 1 ou 2, **caractérisé en ce que** l'étape de recommandation (105) du contenu multimédia à recommander selon le premier score de préférence d'utilisateur et les seconds scores de préférences d'utilisateur comprend :

parmi les seconds scores de préférences d'utilisateur, la détermination d'un troisième score de préférence d'utilisateur qui est similaire au premier score de préférence d'utilisateur ;
la détermination d'un utilisateur destinataire du contenu multimédia à recommander selon le troisième score de préférence d'utilisateur ; et
l'envoi du contenu multimédia à recommander à un dispositif de lecture de l'utilisateur destinataire,
dans lequel les seconds scores de préférences d'utilisateur sont calculés selon des données collectées par des seconds capteurs qui sont montés sur ou à proximité d'une pluralité de dispositifs de lecture correspondant aux contenus multimédia à recommander.

4. Procédé selon la revendication 3, **caractérisé en ce que** l'étape de détermination d'un utilisateur destinataire du contenu multimédia à recommander selon le troisième score de préférence d'utilisateur comprend :

parmi les troisièmes scores de préférences d'utilisateur, la détermination d'un score de préférence d'utilisateur qui est supérieur à un seuil prédéfini ; et

la détermination d'un utilisateur correspondant au score de préférence d'utilisateur qui est supérieur au seuil prédéfini comme utilisateur destinataire du contenu multimédia à recommander.

5. Procédé selon l'une quelconque des revendications 1 à 4, **caractérisé en ce que** les données de visualisation d'utilisateur sont collectées par des premiers capteurs qui sont montés sur ou à proximité d'une pluralité de dispositifs de lecture pendant la durée d'essai.

6. Appareil de recommandation d'un contenu multimédia, comprenant :

un module d'acquisition de données de visualisation d'utilisateur, configuré pour acquérir les données d'un utilisateur qui visualise un contenu multimédia à recommander pendant une durée d'essai, dans lequel les données de visualisation d'utilisateur comprennent au moins des données audio d'utilisateur, des données vidéo d'utilisateur et des données de profondeur vidéo d'utilisateur, ladite durée d'essai étant une durée d'essai de visualisation dudit contenu multimédia à recommander ;

un module d'acquisition destiné aux données d'action d'utilisateur, configuré pour analyser les données de visualisation d'utilisateur, afin d'obtenir des données d'action d'utilisateur correspondant au contenu multimédia à recommander ;

un module de calcul destiné à un score de préférence d'utilisateur, configuré pour calculer un premier score de préférence d'utilisateur du contenu multimédia à recommander selon les données d'action d'utilisateur correspondant au contenu multimédia à recommander ;

un module d'acquisition destiné à un score de préférence d'utilisateur, configuré pour acquérir des seconds scores de préférences d'utilisateur d'une pluralité de contenus multimédia à recommander ; et

un module de recommandation destiné à un contenu multimédia, configuré pour recommander le contenu multimédia à recommander selon le premier score de préférence d'utilisateur et les seconds scores de préférences d'utilisateur ;

dans lequel le module de calcul destiné à un score de préférence d'utilisateur comprend :

une unité de détermination destinée à une action d'utilisateur, configurée pour, pour chacune des données d'action d'utilisateur, déterminer au moins une action d'utilisateur comprise dans la donnée d'action d'utilisateur ;

une unité d'acquisition destinée à une valeur de préférence d'utilisateur, configurée pour examiner les relations correspondantes pré-stockées entre les actions d'utilisateur et les valeurs de préférences d'utilisateur, afin d'obtenir une valeur de préférence d'utilisateur correspondant à la au moins une action d'utilisateur ;

une unité de détermination de pondération, configurée pour déterminer une pondération correspondant à chacune des actions d'utilisateur selon un rapport entre une durée de l'action d'utilisateur et une durée de lecture d'un contenu multimédia à recommander ; et

un module de calcul destiné à un score de préférence d'utilisateur, configuré pour calculer le premier score de préférence d'utilisateur du contenu multimédia à recommander selon la valeur de préférence d'utilisateur et la pondération correspondant à chacune des actions d'utilisateur.

7. Appareil selon la revendication 8, **caractérisé en ce que** l'appareil comprend en outre :

un module de définition destiné à une valeur de préférence d'utilisateur, configuré pour, pour chacune des actions d'utilisateur, prédéfinir une valeur de préférence d'utilisateur pour l'action d'utilisateur ; et

un module de stockage, configuré pour stocker les relations correspondantes entre les actions d'utilisateur et les valeurs de préférences d'utilisateur.

8. Appareil selon la revendication 6 ou 7, **caractérisé en ce que** le module de recommandation destiné à un contenu multimédia comprend :

une unité de détermination destinée à un score de préférence d'utilisateur, configurée pour, parmi les seconds scores de préférences d'utilisateur, déterminer un troisième score de préférence d'utilisateur qui est similaire au premier score de préférence d'utilisateur ;

une unité de détermination destinée à un utilisateur destinataire, configurée pour déterminer un utilisateur destinataire du contenu multimédia à recommander selon le troisième score de préférence d'utilisateur : et

un module d'envoi destiné à un contenu multimédia, configuré pour envoyer le contenu multimédia à recommander à un dispositif de lecture de l'utilisateur destinataire,

dans lequel les seconds scores de préférences d'utilisateur sont calculés selon les données collectées par des seconds capteurs qui sont montés sur ou à proximité d'une pluralité de dispositifs de lecture correspondant aux contenus multimédia recommandés.

**9.** Appareil selon la revendication 8, **caractérisé en ce que** l'unité de détermination destinée à un utilisateur destinataire est configurée pour, parmi les troisièmes scores de préférences d'utilisateur, déterminer un score de préférence d'utilisateur qui est supérieur à un seuil prédéfini ; et pour déterminer un utilisateur correspondant au score de préférence d'utilisateur qui est supérieur au seuil prédéfini comme utilisateur destinataire du contenu multimédia à recommander.

**10.** Programme informatique comprenant des instructions qui permettent d'exécuter les étapes d'un procédé de recommandation d'un contenu multimédia selon l'une quelconque des revendications 1 à 5 lorsque ledit programme est exécuté par un ordinateur.

**11.** Support d'enregistrement lisible par un ordinateur et sur lequel est enregistré un programme informatique comprenant des instructions qui permettent d'exécuter les étapes d'un procédé de recommandation d'un contenu multimédia selon l'une quelconque des revendications 1 à 5.

Acquiring user viewing data of a multimedia resource to be recommended in a trial playing range, wherein the user viewing data includes at least user audio and video data and user video depth data — 101

Analyzing the user viewing data, to obtain user action data corresponding to the multimedia resource to be recommended — 102

Calculating a first user preference score of the multimedia resource to be recommended according to the user action data corresponding to the multimedia resource to be recommended — 103

Acquiring second user preference scores of a plurality of recommended multimedia resources — 104

Recommending the multimedia resource to be recommended according to the first user preference score and the second user preference scores — 105

Fig. 1

Acquiring user viewing data of a multimedia resource to be recommended in a trial playing range, wherein the user viewing data is collected by first sensors which are mounted on or in vicinity of a plurality of playing devices in the trial playing range — 201

Analyzing the user viewing data of the multimedia resource to be recommended, to obtain user action data corresponding to the multimedia resource to be recommended — 202

For each piece of the user action data, determining at least one user action included in the piece of the user action data; and inquiring pre-stored corresponding relationships between the user actions and user preference values, to obtain a user preference value corresponding to the at least one user action — 203

Determining a weight corresponding to each of the user actions according to a ratio of a duration time of the user action to a playing time length of a multimedia resource to be recommended — 204

Calculating a first user preference score of the multimedia resource to be recommended according to the user preference value and the weight corresponding to each of the user actions — 205

Acquiring second user preference scores of a plurality of recommended multimedia resources — 206

Among the plurality of second user preference scores, determining a third user preference score which is similar to the first user preference score — 207

Determining a receiving user of the multimedia resource to be recommended according to the third user preference score; and sending the multimedia resource to be recommended to playing devices of a plurality of receiving users — 208

Acquiring user viewing data collected by third sensors corresponding to the multimedia resource to be recommended; analyzing the user viewing data collected by the third sensors, to obtain a plurality of pieces of user action data corresponding to the multimedia resource to be recommended; and for each piece of the user action data, updating a user preference score of the multimedia resource to be recommended — 209

Fig. 2

Acquiring module for user
viewing data — 301

Acquiring module for user
action data — 302

Calculation module for a user
preference score — 303

Acquiring model for a user
preference score — 304

Recommendation module for
a multimedia resource — 305

Fig. 3

— 400

Server device

Central
processing unit — 422

Power
supply — 426

— 450

Wired or wireless
network interface

Operating system — 441

Data — 444

Application program — 442

— 430

Storage medium

Input/output
interface — 458

Keyboard — 456

Memory — 432

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2012222057 A1